# FASCICULE DE BREVET EUROPEEN

(11) **EP 2 622 232 B1**
(45) Date de publication et mention de la délivrance du brevet: **21.12.2016**
(21) Numéro de dépôt: 11779766.2
(22) Date de dépôt: 30.09.2011
(51) Int. Cl.: F16B 1/00, F16B 12/46, F16B 5/00

(54) **CORNIERE EN MATERIAU COMPOSITE DE FORME ONDULÉE**
GERIFFELTER HALTEWINKEL AUS EINEM VERBUNDSTOFF
CORRUGATED ANGLE BRACKET CONSISTING OF A COMPOSITE MATERIAL

(30) Priorité: 30.09.2010 FR 1057935
(43) Date de publication de la demande: 07.08.2013
(73) Titulaire: SKF Aerospace France, 26240 Saint Vallier (FR)
(72) Inventeur: BUCHIN, Jean-Michel, F-39000 Lons Le Saunier (FR)
(74) Mandataire: Rhein, Alain
(86) Numéro de dépôt international: PCT/FR2011/052283
(87) Numéro de publication internationale: WO 2012/042183

(56) Documents cités:
- WO-A1-2010/072952

## Description

La présente invention a pour objet, dans le domaine des matériaux composites, une cornière destinée à la liaison de pièces faisant entre elles un angle.

Une telle cornière en matériau composite est essentiellement, mais non limitativement, destinée à être utilisée dans le domaine de l'aéronautique, par exemple pour relier deux pièces ou plus, ou pour renforcer un angle, sur une certaine longueur de jonction, et en remplacement de cornières analogues réalisées jusque-là en métal. Ces cornières sont destinées à être solidarisées aux pièces à relier, et sont ainsi pourvues extérieurement au pliage de zones d'accouplement destinées à permettre la fixation desdites pièces à relier, en association avec des moyens de solidarisation, lesquels peuvent consister, non limitativement en des moyens de collage, rivetage ou vissage.

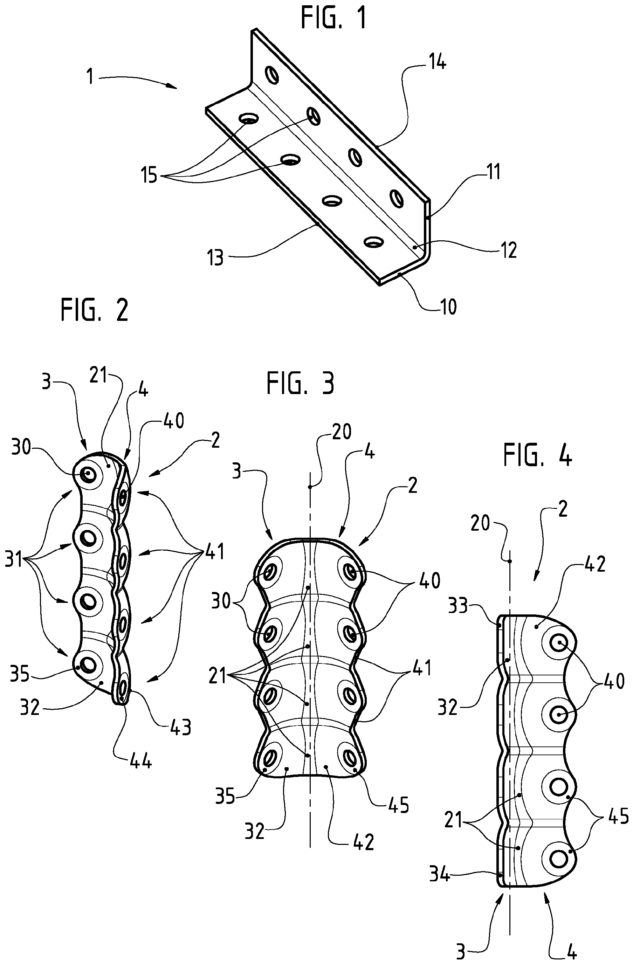

Une cornière de l'état de la technique est représentée à la figure 1. Cette cornière 1 comporte deux ailes 10 et 11 qui font entre elles un angle droit selon un axe longitudinal de pliage 12, dont les faces extérieures 13 et 14 constituent des zones d'accouplement, tandis qu'une multiplicité de trous 15 disposés dans les ailes 10 et 11, de part et d'autre dudit axe de pliage 12, sont destinés à permettre la fixation des pièces à relier au travers de moyens de solidarisation.

Le remplacement des cornières métalliques par des cornières en matériau composite est essentiellement dicté par la nécessité d'un gain de poids. De manière générale, les cornières en matériau composite sont réalisées selon la technique dite "black metal", qui consiste à mouler un matériau composite à la forme et aux dimensions des cornières en métal qu'elles sont destinées à remplacer. Cela présente toutefois des inconvénients du point de vue résistance, même si de manière avantageuse le matériau composite utilisé est constitué de fibres de renfort noyées dans une matrice thermoplastique ou thermodurcissable.

Il est en effet connu que le point faible des matériaux composites est la matrice qui a une résistance spécifique très inférieure à celle des fibres. L'ordre de grandeur est par exemple de 20 MPa pour la résine et de 4000 Mpa pour la fibre de carbone. Aussi, le mode de ruine d'une pièce en composite est généralement une rupture de la résine liant les fibres, et pour une cornière en matériau composite la rupture est observée lors d'un travail essentiellement en dépliage, c'est-à-dire l'écartement des deux ailes.

Pour pallier cet inconvénient il conviendrait que ce soit les fibres de renfort qui soient soumises aux efforts en traction et/ou en compression, et que la résine ne soit pas ou peu sollicitée.

On connaît par le document WO2010072952, une ferrure en L, venant de moulage d'un matériau composite, qui comprend deux parties faisant entre-elles un angle, et percées de trous pour permettre la solidarisation de deux pièces au travers de moyen de fixation, l'une au moins desdites deux parties présentant du côté intérieur de ladite ferrure un profil courbe concave, et plus particulièrement un profil sphérique ou cylindrique, le ou les trous qui y sont pratiqués étant d'axe radial à la courbure.

Cette configuration permet que les fibres de renfort, ou une partie de celles-ci, soient orientées dans le sens de la traction et/ou de la compression, en sorte qu'elles soient sollicitées prioritairement par rapport à la résine.

Cependant, une telle ferrure en L ne permet pas de se substituer à une cornière pour assembler deux pièces faisant entre elles un angle, avec la rigidité voulue. En effet, si une ferrure en L est également destinée à solidariser deux pièces faisant entre elles un angle, une cornière permet de plus de réaliser une telle solidarisation sur une certaine longueur de jonction, lesdites pièces pouvant par exemple consister en des panneaux.

On pourrait envisager de juxtaposer plusieurs de ces ferrures en L en sorte d'obtenir un ensemble de pièces s'étendant sur la longueur de la jonction de deux pièces à assembler. Si le résultat obtenu, au niveau de la résistance à une sollicitation au pliage ou au dépliage, c'est-à-dire en fermeture ou ouverture de l'angle, est de manière évidente supérieur à celui qui pourrait être obtenu avec des cornières de type classique, il n'en est pas de même pour ce qui est de la résistance dans le sens longitudinal, parallèle à l'axe de pliage. En effet, les ferrures en L de cet ensemble ne sont pas reliées entre elles, si ce n'est par lesdites pièces elles-mêmes, lesquelles ne présentent pas nécessairement une grande rigidité.

La présente invention a pour but de proposer une cornière en matériau composite destinée à la liaison de pièces faisant entre elles un angle, et permettant de résoudre les divers inconvénients précités, à savoir offrir une résistance au pliage et au dépliage, tout en étant rigide dans le sens longitudinal, indépendamment des caractéristiques de rigidité des pièces à relier.

La cornière de liaison de pièces réalisée en matériau composite selon l'invention, comporte deux ailes qui font entre elles un angle selon un axe longitudinal de pliage et qui comportent extérieurement audit pliage des zones d'accouplement destinées à permettre la fixation des pièces à relier, en association avec des moyens de solidarisation, et elle se caractérise essentiellement en ce qu'elle présente au moins une succession, au moins dans le sens longitudinal, de parties bombées de profil concave ou convexe intérieurement et/ou extérieurement audit pliage, lui conférant dans le sens longitudinal une forme.

Selon une caractéristique additionnelle de la cornière en matériau composite selon l'invention, la zone d'accouplement d'une aile est séparée de la zone d'accouplement d'une autre aile par au moins une partie bombée.

Selon une caractéristique additionnelle de la cornière en matériau composite selon l'invention, la ou les zones d'accouplement sont réalisées chacune au niveau d'une zone qui est convexe du côté extérieur au pliage.

Selon une autre caractéristique additionnelle de la cornière en matériau composite selon l'invention, la ou les successions de parties bombées s'étendent également selon un alignement transversal et/ou oblique en passant d'une aile à l'autre.

Selon un mode de réalisation particulier de la cornière en matériau composite selon l'invention, chacune des ailes est constituée d'une succession, dans le sens longitudinal, de zones de profil concave du côté intérieur du pliage, chacune desdites zones de profil concave d'une aile étant reliée à une zone de profil concave de l'autre aile au travers d'une zone intermédiaire également de profil concave du côté intérieur dudit pliage.

Selon une caractéristique additionnelle mode de réalisation particulier de la cornière en matériau composite selon l'invention, les zones de profil concave reliées par une zone intermédiaire de profil concave sont disposées au droit l'une de l'autre par rapport à la ligne longitudinale de pliage.

Selon une autre caractéristique additionnelle de la cornière en matériau composite selon l'invention, les moyens de solidarisation consistent en des moyens de solidarisation par vissage ou rivetage, à cet effet les zones d'accouplement sont percées de trous dont l'axe de chacun est radial à la courbure de la partie bombée dans laquelle il est pratiqué.

Selon une autre caractéristique additionnelle de la cornière en matériau composite selon l'invention, chacun des trous est pratiqué dans une partie qui présente du côté extérieur au pliage, une face plane constituant un plan d'accouplement.

Selon une autre caractéristique additionnelle de la cornière en matériau composite selon l'invention, la paroi extérieure au pliage d'au moins une aile est plane.

Selon une autre caractéristique additionnelle de la cornière en matériau composite selon l'invention, la paroi extérieure plane consiste en la paroi extérieure d'un élément surmoulé sur l'aile.

Selon une autre caractéristique additionnelle de la cornière en matériau composite selon l'invention, chacun des trous est pratiqué dans une partie qui présente du côté intérieur au pliage, une face plane constituant un plan d'appui au moyen de solidarisation.

Selon une autre caractéristique additionnelle de la cornière en matériau composite selon l'invention, la ligne longitudinale de pliage est courbe ou angulée.

Les avantages et les caractéristiques de la cornière en matériau composite selon l'invention, ressortiront plus clairement de la description qui suit et qui se rapporte au dessin annexé, lequel en représente un mode de réalisation non limitatif.

Dans le dessin annexé :
- la figure 1 représente une vue schématique en perspective d'une cornière de l'état de la technique.
- la figure 2 représente une vue schématique en perspective d'un premier mode de réalisation d'une cornière en matériau composite selon l'invention.
- la figure 3 représente une vue schématique en perspective sous un autre angle de la même cornière selon l'invention.
- la figure 4 représente une vue schématique en plan de la même cornière selon l'invention.

En référence aux figures 2, 3 et 4, on peut voir un premier mode de réalisation 2 d'une cornière en matériau composite selon l'invention.

Cette cornière 2 comporte, de manière connue en soi deux ailes 3 et 4, faisant entre elles un angle selon un axe de pliage 20, en l'occurrence il s'agit, non limitativement, d'un angle droit.

Chacune des ailes 3 et 4 comporte une multiplicité de trous, respectivement 30 et 40, en l'occurrence non limitativement quatre, alignés longitudinalement, et destinés recevoir des moyens de solidarisation tels que par exemple des boulons ou des rivets etc...,

Selon l'invention, la cornière 2 présente une géométrie particulière, destinée à lui donner une résistance accrue.

Ainsi, chacun des trous, respectivement 30 et 40, est réalisé dans une partie bombée, respectivement 31 et 41, qui présente du côté intérieur de la cornière 2 un profil concave, respectivement 32 et 42, et du côté extérieur un profil convexe, respectivement 33 et 43. Chacune des ailes 3 et 4 est ainsi constituée d'une succession, dans le sens longitudinal, de partie bombée, respectivement 31 et 41.

L'axe de chacun des trous 30 et 40 est radial à la courbure de la partie bombée, respectivement 31 et 41, dans laquelle il est réalisé. Chacune des parties bombées 31 et 41 présente, au niveau du pourtour du trou, respectivement 30 et 40, qu'elle comporte, d'une part du côté extérieur de la cornière 2, une face plane d'accouplement, respectivement 34 et 44, destinée à constituer un plan d'appui pour la pièce à fixer, et d'autre part du côté intérieur de la cornière 2, une face plane, respectivement 35 et 45, destinée à constituer un plan d'appui au moyen de fixation, non représenté, pour chacun des trous, respectivement 30 et 40, la face plane d'accouplement, respectivement 34 et 44, étant parallèle à la face plane intérieure, respectivement 35 et 45.

De manière non limitative, les faces planes 34, 35, 44 et 45, présentent une forme d'anneau concentrique au trou, respectivement 30 et 40.

Dans la mesure où chaque aile est destinée à être appliquée contre une pièce plane, les faces planes d'accouplement 34 sont toutes dans le même plan, tandis que les faces planes d'accouplement 44 sont également dans un même plan, ces deux plans faisant entre eux, dans le cas représenté, un angle droit, tout en sachant qu'il est parfaitement possible, dans des variantes non représentées, que l'angle formé par les deux plans soit autre que droit.

Par ailleurs, chacune des parties bombées 31 est positionnée au droit, par rapport à l'axe 20, d'une zone 41, et ces parties bombées 31 et 41 voisines sont liées par une partie intermédiaire bombée 21, de profil concave du côté intérieur de la cornière 2. La cornière 2 selon l'invention consiste ainsi en une succession, dans le sens longitudinal, de segments d'anneau qui s'étendent transversalement et qui comprennent à chacune de leur extrémité un trou, 30 et 40.

On notera que, du fait de la succession dans le sens transversal des parties bombées 31, 21 et 41, qui présentent chacune un rayon de courbure, chacune des zones de jonction entre ces parties bombées

La cornière 2 est obtenue par un procédé de moulage, comprenant successivement une opération de superposition de plis pré-imprégnés dans un moule, une opération de compression, et d'exposition à des conditions particulières de température et de pression liées à la matière utilisée, jusqu'à polymérisation. Les matériaux utilisés sont, préférentiellement mais non limitativement, une résine de type époxy et des fibres de carbone.

Ainsi, les fibres de renfort suivent la courbure des différentes parties bombées 21, 31 et 41, sans qu'il y ait de rupture, et particulièrement entre les parties bombées 31 et 41 qui comportent les trous de fixation 30 et 40, au travers des zones 21.

On comprendra que lorsque la cornière 32 est soumise à des efforts, notamment en pliage ou en dépliage, exercés au niveau des points de solidarisation, ils sont supportés d'un point de solidarisation à l'autre pratiquement exclusivement par les fibres, dans l'axe longitudinal de celles-ci, en sorte que la sollicitation de la matrice soit minimisé.

Des nombreuses variantes, non représentées, de la cornière selon l'invention sont réalisables.

Il est ainsi possible que l'axe de pliage ne soit pas rectiligne, mais courbe ou angulé, tout en conservant le même écart angulaire entre les ailes 3 et 4.

Le profil des parties bombées 31 et/ou 41, du côté intérieur au pliage, peut ne pas être plan sur le pourtour, mais garder une certaine concavité, à laquelle les surfaces d'appui des moyens de solidarisation sont adaptées.

Il est également possible que les parties bombées 31 et 41 voisines ne soient pas au droit l'une de l'autre par rapport à l'axe de pliage, mais décalées obliquement par rapport à l'axe de pliage 20, ceci en fonction de la spécificité de l'assemblage à réaliser. Il est également possible que les parties bombées soient alignées obliquement et transversalement.

D'autre part, afin d'accroître la surface de contact avec les pièces à solidariser, il est possible d'accroître la surface des faces planes d'accouplement 34 et/ou 44, avec toutefois une répercussion sur la résistance de la cornière 2. Pour pallier cet inconvénient, il est cependant possible de surmouler un élément sur la face extérieure de l'aile 3 et/ou 4, cet élément présentant une face entièrement plane destinée à venir en appui contre la pièce à solidariser.

## Revendications

1. Cornière (2) de liaison de pièces réalisée en matériau composite, comportant deux ailes (3, 4) qui font entre elles un angle selon un axe longitudinal de pliage (20) et qui comportent extérieurement audit pliage des zones d'accouplement (34, 44) destinées à permettre la fixation des pièces à relier, en association avec des moyens de solidarisation, **caractérisée en ce qu'**elle présente au moins une succession, au moins dans le sens longitudinal, de parties bombées (21, 31, 41) de profil concave (32, 42) ou convexe (33, 43) intérieurement et/ou extérieurement audit pliage, lui conférant dans le sens longitudinal une forme ondulée.

2. Cornière (2) en matériau composite selon la revendication 1, **caractérisée en ce que** la zone d'accouplement (34, 44) d'une aile (3, 4) est séparée de la zone d'accouplement (34, 44) d'une autre aile (3, 4) par au moins une partie bombée (21, 31, 41).

3. Cornière (2) en matériau composite selon la revendication 1 ou la revendication 2, **caractérisée en ce que** la ou les zones d'accouplement (34, 44) sont réalisées chacune au niveau d'une zone (33, 43) qui est convexe du côté extérieur au pliage.

4. Cornière (2) en matériau composite selon l'une quelconque des revendications 1 à 3, **caractérisée en ce que** la ou les successions de parties bombées (21, 31, 41) s'étendent selon également un alignement transversal et/ou oblique en passant d'une aile (3, 4) à l'autre.

5. Cornière (2) en matériau composite selon l'une quelconque des revendications 1 à 4, **caractérisée en ce que** chacune des ailes (3, 4) est constituée d'une succession, dans le sens longitudinal, de zones (32, 42) de profil concave du côté intérieur du pliage, chacune desdites zones (32, 42) de profil concave d'une aile (3, 4) étant reliée à une zone (32, 42) de profil concave de l'autre aile (3, 4) au travers d'une zone intermédiaire (21) également de profil concave du côté intérieur dudit pliage.

6. Cornière (2) en matériau composite selon la revendication 5, **caractérisée en ce que** les zones (32, 42) de profil concave reliées par une zone intermédiaire (21) de profil concave sont disposées au droit l'une de l'autre par rapport à la ligne longitudinale de pliage.

7. Cornière (2) en matériau composite selon l'une quelconque des revendications 1 à 6, **caractérisée en ce que** les moyens de solidarisation consistent en des moyens de solidarisation par vissage ou rivetage, à cet effet les zones d'accouplement (34, 44) sont percées de trous (30, 40) dont l'axe de chacun est radial à la courbure de la partie bombée (31, 41) dans laquelle il est pratiqué.

8. Cornière (2) en matériau composite selon la revendication 7, **caractérisée en ce que** chacun des trous (30, 40) est pratiqué dans une partie qui présente du côté extérieur au pliage, une face plane (34, 44) constituant un plan d'accouplement.

9. Cornière (2) en matériau composite selon la revendication 7 ou la revendication 8, **caractérisée en ce que** chacun des trous (30, 40) est pratiqué dans une partie qui présente du côté intérieur au pliage, une face plane (35, 45) constituant un plan d'appui pour le moyen de solidarisation.

10. Cornière en matériau composite selon l'une quelconque des revendications 1 à 9, **caractérisée en ce que** la paroi extérieure au pliage d'au moins une aile (3, 4) est plane.

11. Cornière (2) en matériau composite selon la revendication 10, **caractérisée en ce que** la paroi extérieure plane consiste en la paroi extérieure d'un élément surmoulé sur l'aile (3, 4).

12. Cornière (2) en matériau composite selon l'une quelconque des revendications 1 à 11, **caractérisée en ce que** la ligne longitudinale de pliage (20) est courbe ou angulée.

## Patentansprüche

1. Winkelprofil (2) zur Verbindung von Bauteilen, das aus Verbundmaterial hergestellt ist, das zwei Schenkel (3, 4) aufweist, die zwischen sich einen Winkel gemäß einer Längsfaltachse (20) bilden und außerhalb der Faltung Kopplungszonen (34, 44) aufweisen, die dazu bestimmt sind, die Befestigung der zu verbindenden Bauteile zu ermöglichen, in Verbindung mit Einrichtungen zur festen Verbindung, **dadurch gekennzeichnet, dass** es mindestens eine Folge, mindestens in Längsrichtung, von gewölbten Teilen (21, 31, 41) mit konkavem (32, 42) oder konvexem Profil (33, 43) innerhalb und/oder außerhalb der Faltung aufweist, die ihm in Längsrichtung eine gewellte Form verleihen.

2. Winkelprofil (2) aus Verbundmaterial nach Anspruch 1, **dadurch gekennzeichnet, dass** die Kopplungszone (34, 44) eines Schenkels (3, 4) von der Kopplungszone (34, 44) eines anderen Schenkels (3, 4) durch mindestens einen gewölbten Teil (21, 31, 41) getrennt ist.

3. Winkelprofil (2) aus Verbundmaterial nach Anspruch 1 oder Anspruch 2, **dadurch gekennzeichnet, dass** die Kopplungszone(n) (34, 44) je im Bereich einer Zone (33, 43) hergestellt sind, die auf der Seite außerhalb der Faltung konvex ist.

4. Winkelprofil (2) aus Verbundmaterial nach einem der Ansprüche 1 bis 3, **dadurch gekennzeichnet, dass** die Folge(n) von gewölbten Teilen (21, 31, 41) sich beim Übergang von einem Schenkel (3, 4) zum anderen ebenfalls gemäß einer Quer- und/oder Schrägausrichtung erstrecken.

5. Winkelprofil (2) aus Verbundmaterial nach einem der Ansprüche 1 bis 4, **dadurch gekennzeichnet, dass** jeder der Schenkel (3, 4) aus einer Folge in Längsrichtung von Zonen (32, 42) mit konkavem Profil auf der Innenseite der Faltung besteht, wobei jede dieser Zonen (32, 42) mit konkavem Profil eines Schenkels (3, 4) mit einer Zone (32, 42) mit konkavem Profil des anderen Schenkels (3, 4) über eine Zwischenzone (21) mit ebenfalls konkavem Profil auf der Innenseite der Faltung verbunden ist.

6. Winkelprofil (2) aus Verbundmaterial nach Anspruch 5, **dadurch gekennzeichnet, dass** die Zonen (32, 42) mit konkavem Profil, die durch eine Zwischenzone (21) mit konkavem Profil verbunden werden, bezüglich der Längsfaltlinie einander gegenüber angeordnet sind.

7. Winkelprofil (2) aus Verbundmaterial nach einem der Ansprüche 1 bis 6, **dadurch gekennzeichnet, dass** die Einrichtungen zur festen Verbindung aus Einrichtungen zur festen Verbindung durch Schrauben oder Nieten bestehen, zu diesem Zweck sind die Kopplungszonen (34, 44) mit Löchern (30, 40) durchbohrt, deren jeweilige Achse radial zur Krümmung des gewölbten Teils (31, 41) ist, in dem es ausgearbeitet ist.

8. Winkelprofil (2) aus Verbundmaterial nach Anspruch 7, **dadurch gekennzeichnet, dass** jedes der Löcher (30, 40) in einem Teil ausgeführt ist, der auf der Seite außerhalb der Faltung eine ebene Seite (34, 44) aufweist, die eine Kopplungsebene bildet.

9. Winkelprofil (2) aus Verbundmaterial nach Anspruch 7 oder Anspruch 8, **dadurch gekennzeichnet, dass** jedes der Löcher (30, 40) in einem Teil ausgeführt ist, der auf der Innenseite der Faltung eine ebene Seite (35, 45) aufweist, die eine Auflageebene für die Einrichtung zur festen Verbindung bildet.

10. Winkelprofil aus Verbundmaterial nach einem der Ansprüche 1 bis 9, **dadurch gekennzeichnet, dass** die Wand außerhalb der Faltung mindestens eines Schenkels (3, 4) eben ist.

11. Winkelprofil (2) aus Verbundmaterial nach Anspruch 10, **dadurch gekennzeichnet, dass** die ebene Außenwand aus der Außenwand eines auf den Schenkel (3, 4) aufgeformten Elements besteht.

12. Winkelprofil (2) aus Verbundmaterial nach einem der Ansprüche 1 bis 11, **dadurch gekennzeichnet, dass** die Längsfaltlinie (20) krumm oder winklig ist.

## Claims

1. Angle bracket (2) for connecting parts, made of a composite material, comprising two flanges (3, 4) which enclose an angle along a longitudinal bend axis (20) and which comprise, externally with respect to said bend, coupling zones (34, 44) designed to allow attachment of the parts to be connected, in conjunction with securing means, **characterized in that** it has at least one succession, at least in the longitudinal direction, of domed portions (21, 31, 41) of concave (32, 42) or convex (33, 43) profile internally and/or externally with respect to said bend, lending it a corrugated shape in the longitudinal direction.

2. Angle bracket (2) made of composite material according to Claim 1, **characterized in that** the coupling zone (34, 44) of one flange (3, 4) is separated from the coupling zone (34, 44) of another flange (3, 4) by at least one domed portion (21, 31, 41).

3. Angle bracket (2) made of composite material according to Claim 1 or Claim 2, **characterized in that** the coupling zone or zones (34, 44) are each created at a zone (33, 43) which is convex externally with respect to the bend.

4. Angle bracket (2) made of composite material according to any one of Claims 1 to 3, **characterized in that** the succession(s) of domed portions (21, 31, 41) extend(s) also along a transverse and/or oblique alignment, passing from one flange (3, 4) to the other.

5. Angle bracket (2) made of composite material according to any one of Claims 1 to 4, **characterized in that** each one of the flanges (3, 4) consists of a succession, in the longitudinal direction, of zones (32, 42) of concave profile internally with respect to the bend, each one of said zones (32, 42) of concave profile of one flange (3, 4) being connected to a zone (32, 42) of concave profile of the other flange (3, 4) via an intermediate zone (21), also of concave profile internally with respect to said bend.

6. Angle bracket (2) made of composite material according to Claim 5, **characterized in that** the zones (32, 42) of concave profile connected by an intermediate zone (21) of concave profile are arranged in line with one another with respect to the longitudinal bend line.

7. Angle bracket (2) made of composite material according to any one of Claims 1 to 6, **characterized in that** the securing means consist of means for securing by screwing or riveting; to that end the coupling zones (34, 44) are pierced with holes (30, 40), the axis of each of these being radial to the curvature of the domed portion (31, 41) in which it is made.

8. Angle bracket (2) made of composite material according to Claim 7, **characterized in that** each one of the holes (30, 40) is made in a portion which has, externally with respect to the bend, a planar face (34, 44) that constitutes a coupling plane.

9. Angle bracket (2) made of composite material according to Claim 7 or Claim 8, **characterized in that** each one of the holes (30, 40) is made in a portion which has, internally with respect to the bend, a planar face (35, 45) that constitutes a bearing plane for the securing means.

10. Angle bracket made of composite material according to any one of Claims 1 to 9, **characterized in that** the wall external with respect to the bend of at least one flange (3, 4) is planar.

11. Angle bracket (2) made of composite material according to Claim 10, **characterized in that** the outer planar wall consists of the outer wall of an element overmoulded onto the flange (3, 4).

12. Angle bracket (2) made of composite material according to any one of Claims 1 to 11, **characterized in that** the longitudinal bend line (20) is curved or angled.
